# EUROPEAN PATENT SPECIFICATION

(11) **EP 3 521 754 B1**
(45) Date of publication and mention of the grant of the patent: **07.12.2022**
(21) Application number: 17854985.3
(22) Date of filing: 29.09.2017
(51) Int. Cl.: G01C 21/00, G01C 21/32, G09B 29/00, G01C 21/36

(54) **SYSTEM FOR MARKING LOCATIONS ALONG ROADS IN MAP AND METHOD THEREFOR**
SYSTEM ZUR MARKIERUNG VON STELLEN ENTLANG VON STRASSEN AUF EINER KARTE UND VERFAHREN DAFÜR
SYSTÈME DE MARQUAGE D'EMPLACEMENTS LE LONG DE ROUTES SUR UNE CARTE ET PROCÉDÉ ASSOCIÉ

(30) Priority: 29.09.2016 CN 201610866750; 27.09.2017 CN 201710895340
(43) Date of publication of application: 07.08.2019
(73) Proprietor: Tang, Xiaoqing, Shenzhen, Guangdong 518000 (CN)
(72) Inventor: Tang, Xiaoqing, Shenzhen, Guangdong 518000 (CN)
(74) Representative: Viering, Jentschura & Partner mbB Patent- und Rechtsanwälte
(86) International application number: PCT/CN2017/104264
(87) International publication number: WO 2018/059535

(56) References cited:
- CN-A- 101 231 798
- CN-A- 103 884 345
- CN-A- 104 317 830
- CN-A- 106 323 303
- KR-A- 20090 059 518
- US-A1- 2003 083 811
- US-A1- 2003 083 811
- US-A1- 2016 313 130

## Description

### BACKGROUND OF THE INVENTION

### 1. TECHNICAL FIELD

The present invention relates to a system for marking locations along roads in a map and method therefor; in particular, to a system and a method that describe the location of a site using transverse and longitudinal distances along a central line of a road in a map based on a satellite positioning system and enter the description of the location into a navigation system for guidance.

### 2. BACKGROUND ART

This application claims the priority of the Chinese patent documents CN106323303A submitted on September 29, 2016.

American patent literature US2003/0083811 A1 discloses a method and device for finding positions in digital maps, in which a second coordinate system is determined by reference to the first coordinate system, the coordinate data of a required position is determined by reference to the second coordinate system, search the second coordinate system in the digital map, and find the desired position in the first digital map by inputting the coordinate data of the required position in the second coordinate system. The second coordinate system takes one end of a road in the digital map as the starting point and the other end as the end point. It is a one-dimensional coordinate system established along the edge of the road, and the position of elements (such as vehicles) in the road is determined by the length from the starting point.

Chinese patent literature CN 103884345 A discloses a information collection method, display method, device and system of interest point, in which the position information of the interest point based on latitude and longitude coordinate system is obtained first, and then the linear coordinate system is established according to the road to which the interest point belongs, so as to obtain the position information of the interest point relative to the belonging road, establish the relationship between the interest point and the preset road, and use the road as the coordinate system to display all the information points of the road when displaying interest points. The position relation between the interest point and the road is two-dimensional coordinate.

Even with mature satellite positioning system, electronic map navigation, and location sharing technologies, some locations are still difficult to describe and transfer and landmarks are found not unique in many application scenarios. The following methods can be used to describe locations:
1. Longitude and latitude data provided by a satellite positioning system
   Although the longitude and latitude data determined by a satellite are accurate, they are complex, not intuitive, and hard to understand and are mainly used for location computation in digital devices.
2. Mileposts on a road
   The mileposts on a road are markers placed at intervals along two sides of a road and each showing the distance away from a start point of the road. Due to various restrictions, the marking on the mileposts is of low precision (for example, it cannot be precise to 1 meter) and high manufacturing costs and is difficult to maintain. Therefore, the mileposts cannot be placed on every road and are currently mainly used on expressways. Moreover, the mileposts, marked with one-dimensional data, can only reflect distances from locations on the road to the start point of the road, and cannot reflect distances from locations to the roadside. In other words, the mileposts can only describe locations on a line, instead of describing locations in a plane.
3. Doorplate numbers
   This method is mainly used to mark locations of buildings in a map at present. It can accurately mark the locations of buildings but of limited precision. Taking a large building for example, it is marked by one number, and even if some doorplate gives clear indication of whether it is the east gate or west gate, since the gates are far from each other, the precision of location description is still too low. The doorplates merely show the serial numbers of buildings and are lack of distance information about the locations. For example, the distance from No. 100 Shennan Avenue to No. 200 Shennan Avenue cannot be acquired from their doorplate numbers.
4. Location sharing
   Plenty of software provides the location sharing function, but there are still many limitations. For example, it is impossible to implement location sharing if associations are not established. A location can only be indicated in an advertisement through address description, and in this case, it is impossible to implement location sharing through software.
5. Nearby landmarks
   When a location is described using nearby landmarks, misunderstandings may be caused if the names of the buildings serving as landmarks are not unique. For example, two "Liyuan Villages" exist in Nanshan District of Shenzhen, and they are five or six kilometers apart in spite of the same name. Although improvements can be made by adding names of nearby roads, the implementation is rather complex and the combined address is not well received as a destination by navigation software for guidance.

### SUMMARY OF THE INVENTION

An objective of the present invention is to provide a method for a system for marking locations along roads in a map to solve the defects in the prior art.

According to the present invention, a method as defined in claim 1 is provided. The dependent claim shows a preferred embodiment.

A location information displaying module, configured to display the location data that are resulted from conversion and are marked along the roads.

Preferably, the satellite positioning system is GPS, BeiDou, GLONASS, Galileo, or the like.

Preferably, the location information is expressed in longitude and latitude.

Preferably, the start point 0 and the terminal point in Step S2 are determined by intersections between central lines of cross roads. If no cross road exists at the start point 0 or the terminal point, the start point 0 or the terminal point is determined by a start point or a terminal point of an actual road.

Preferably, when the central line of the road does not completely coincide with a median strip of the road in Step S3, the distance from a site to the start point 0 is measured along the central line of the road.

Preferably, the vertical distance from a longitudinal location to the central line of the road in Step S3 is measured by using an intersection between the central line of the road and the vertical line thereof as the point 0, or by using an intersection between a central line of the median strip on the road and the vertical line of the central line of the road as the point 0.

Preferably, if the central line of the virtual road is a fold line, a vertical line drawn from a point between two segments of the fold line only intersects an extension line of the fold line. The location of a point on the extension line is indicated by using the distance from the point to the intersection between the fold line segments, and is marked with a minus sign "-" for distinction.

Preferably, the method further includes: enabling the marking of three-dimensional locations by adding height data to plane locations.

Compared with the prior art, the present invention at least has the following beneficial effects. Because the marking is performed in a map and does not need on-site signs, the present invention can implement low manufacturing costs, quick manufacturing speed, sharing, and low maintenance costs. Since the marking is virtually performed, it is not limited by physical distances as in the case of placing mileposts, and achieves high precision; for example, it can be precise to 1 meter (while it is impossible to place a marker at an interval of 1 meter). Moreover, transverse and longitudinal locations can be marked, so plane locations can be marked; while mileposts can only be used to mark locations on a road, that is, locations on a line. Besides, the method can mark spatial locations by adding height.

According to the present invention, the description of locations is as natural as doorplate numbers; such description is of high precision and can be precise to one meter; the concept of distance is brought in, and therefore, the distance between two locations on a road can be figured out as long as information about the two locations is known. The description of a location can be directly entered as a destination into an electronic map for navigation. Such description is unique and unambiguous within a certain range. It is convenient to know location information through the electronic map.

The present invention facilitates positioning and navigation without a map on small-screen devices. Locations need to be checked and confirmed in a map due to their inaccurate descriptions; however, by using the method capable of accurately describing locations according to the present invention, there is no need to check and confirm locations in a map, and thus a large screen is not needed, which leads to miniaturization of navigators.

### BRIEF DESCRIPTION OF DRAWINGS

FIG. 1 illustrates measurement of distances by taking a south end of Yannan Road as a start point S and along a central line X of the road.
FIG. 2 illustrates a method for determining locations on side roads by vertical distances from the locations to corresponding locations on a central line of a main road.
FIG. 3 illustrates a method for determining longitudinal locations along a road when a central line of the road does not coincide with a median barrier on the road.
FIG. 4 illustrates a method for determining, by using a central line of a virtual road, distances from locations to a road start point 0 and longitudinal distances from the locations to a central line of the road.
FIG. 5 illustrates a method for determining distances from locations to a road start point and longitudinal distances from the locations to a central line of a road when a central line of a virtual road is a fold line.

### DETAILED DESCRIPTION OF THE PREFERRED EMBODIMENTS

The present invention is further described below with reference to the accompanying drawings and embodiments.

### Embodiment 1

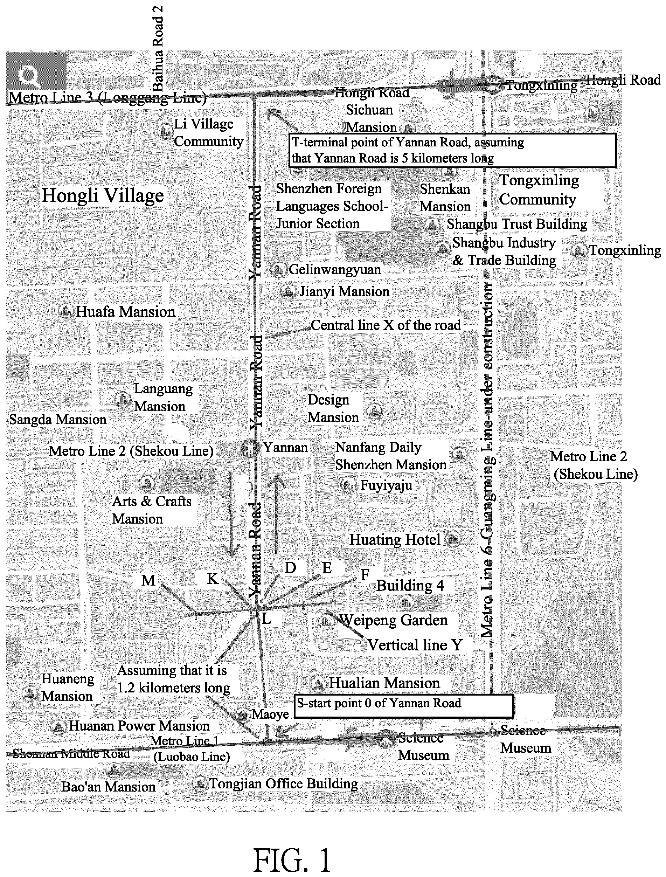

Referring to FIG. 1, a south end of Yannan Road is taken as a start point 0 (that is, point S in the figure), and distances are measured along a central line X of the road in the present embodiment. In FIG. 1, it is assumed that the distance from a point D on the central line to the start point 0 (point S) is 1.2 kilometers, and the point D is marked as "Yannan Road 1200". Four points E, F, K, M are on a line Y that passes through the point D and is vertical to the line X. The points E, K are inside the road, and it is assumed that the points E, K are both 2 meters away from the point D along the vertical line Y. The points F, M are outside the road, and it is assumed that the points F, M are both 30 meters away from the point D along the vertical line Y. Therefore, the locations of E, K are respectively marked as "Yannan Road A1200V2" and "Yannan Road B1200V2", where V indicates that the transverse marked points are inside "Yannan Road". As for locations inside the road, the digits following V can also be omitted, and in this case, the locations are marked as "Yannan Road A1200V" and "Yannan Road B1200V". The points F, M are outside the road and are respectively marked as "Yannan Road A1200P30" and "Yannan Road B1200P30", where P indicates that the transverse marked points are outside "Yannan Road". Besides, the points K, M can also be marked as "Yannan Road C3800V2" and "Yannan Road C3800P30", where C indicates that the distances are marked by taking a terminal point of Yannan Road as the start point 0. If the vertical distances from the points F, M to the point D are both 3.2 kilometers, they are respectively marked as "Yannan Road A1200P3200" and "Yannan Road B1200P3200", where "3200" means 3200 meters. As for locations within a short distance away from the road, the digits and letters following P can also be omitted, and in this case, the locations are marked as "Yannan Road A1200P" and "Yannan Road B1200P".

### Embodiment 2

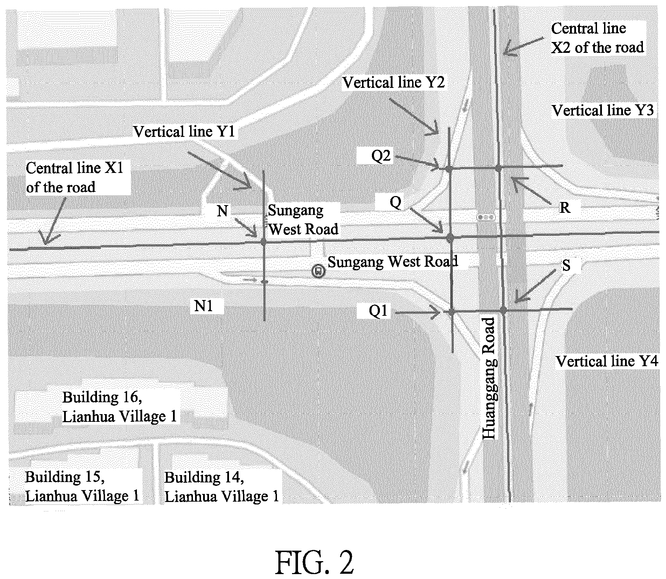

Referring to FIG. 2, different from Embodiment 1, Embodiment 2 focuses on how to mark locations on side roads since some road has side roads and branches. Locations on side roads are determined by vertical distances from the locations to corresponding locations on a central line of a main road, instead of by measuring actual distances from the locations to a start point 0 along the side roads. As shown in FIG. 2, it is assumed that the location of a point N on a central line X1 of a road is marked as "Sungang West Road 3651", and the distance from N1 to N along a vertical line Y1 is 15 meters; in this case, the location of N1 is marked as "Sungang West Road A3651V15 ". It is assumed that the location of a point Q on the central line X1 of the road is marked as "Sungang West Road 4123", Q1 is 23 meters away from Q along a vertical line Y2, and Q2 is 21 meters away from Q along the vertical line Y2; in this case, the location of Q1 is marked as "Sungang West Road A4123V23" and the location of Q2 is marked as "Sungang West Road B4123V21". It can be seen from FIG. 2 that, Q1, Q2 are located at intersections between Sungang West Road and Huanggang Road, and therefore, Q1 can also be marked as "Huanggang Road A5310V12" (it is assumed that the location of a point S is marked as "Huanggang Road 5310 ", and Q1 is 12 meters away from the point S along a vertical line Y4); Q2 can also be marked as "Huanggang Road A5002V12" (it is assumed that the location of a point R is marked as "Huanggang Road 5002", and Q2 is 12 meters away from the point R along a vertical line Y3).

If necessary, descriptive words such as "side road", "branch", and "overpass" can be added at the end. For example, the locations of Q1, Q2 can also be described as "Sungang West Road A4123V23 branch" and "Sungang West Road B4123V21 branch". The descriptive words are only used when marked locations are inside the road, and are not used when the locations are outside the road, to avoid reducing the simplicity of location description due to redundant descriptive words.

If Q1, Q2 are outside the road, they can be respectively marked as "Sungang West Road A4123P23" and "Sungang West Road B4123P21" or as "Huanggang Road A5310P12" and "Huanggang Road A5002P12", and the like.

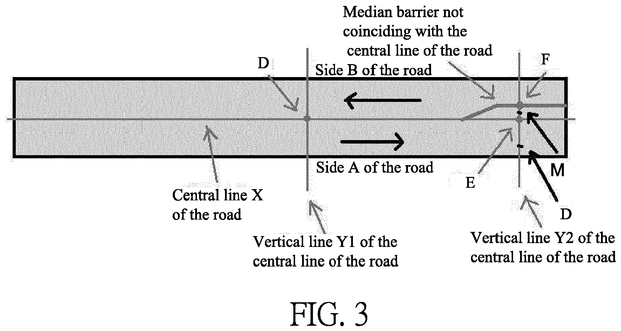

As shown in FIG. 3, the median barrier at some road junctions is not in the middle of the road but closer to one side to make room for a left-turn lane. When the central line of the road does not coincide with the median barrier, the distances from locations inside the road to the start point 0 are measured along the central line of the road. Longitudinal distances to the road can be measured by taking a point on the central line of the road as the point 0 or by taking a point on the median barrier as the point 0, and in each case, the measurement is performed along vertical lines of the central line of the road. In FIG. 3, an intersection E between the vertical line Y2 of the central line X of the road and the line X does not coincide with an intersection F between Y2 and the median barrier. Therefore, the point E or the point F can be selected as the point 0 for the measurement of longitudinal distances along the vertical line Y2. It depends on the fact which method is more suitable for batch manufacturing in a map in engineering practice and whether misunderstanding will be caused in use.

In FIG. 3, the road is divided by the central line, a point N is located at Side A of the road, a point M is located at Side B of the road, but M is between the central line of the road and the median barrier and is in the same advancing direction as N. Therefore, the direction of M is also marked by A and its longitudinal distance is a negative value. If the location of the point E on the central line of the road is marked as "Zhongxin Road 356P0"and the linear distance between M and E is 2 meters, the location of M is marked as "Zhongxin Road A356P-2" with the central line of the road serving as the longitudinal point 0.

### Embodiment 3

For a winding road, a central line of a virtual road is used to determine a distance from a location to a start point 0 and longitudinal and transverse distances of the location.

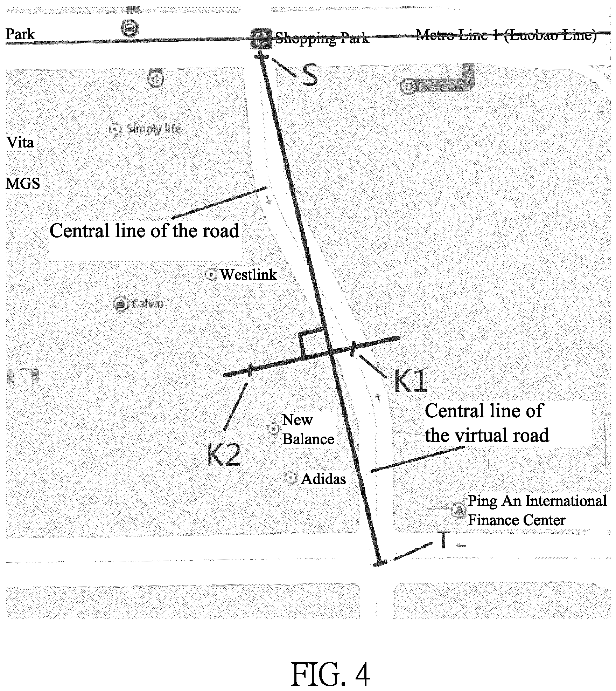

Referring to FIG. 4, a start point (S) and a terminal point (T) of a winding road serve as a start point and a terminal point of a central line of a virtual road, and the two points are connected by a straight line to form a central line of a virtual road. A line vertical to the central line of the virtual road is drawn through a point K2, and intersects a central line of the actual road at K1. The transverse distance of K2 is the distance from K1 to the start point 0 measured along the central line of the actual road (the distance is assumed to be 830 meters), and the longitudinal distance of K2 is the linear distance from K2 to K1 (the distance is assumed to be 10 meters). In FIG. 4, if the name of the road is "Zhongxin Road" and the direction where K2 is located is marked by A, the location of K2 is described as "Zhongxin Road A830P10". If a location K3 (not shown) in the space above is projected onto the point K2 and the distance from K2 to K3 is 300 meters, the location of K3 can be described as "Zhongxin Road A830P10H300". If a location K4 (not shown) in the space below is projected onto the point K2 and the distance from K2 to K4 is 20 meters, the location of K4 can be described as "Zhongxin Road A830P10L20".

### Embodiment 4

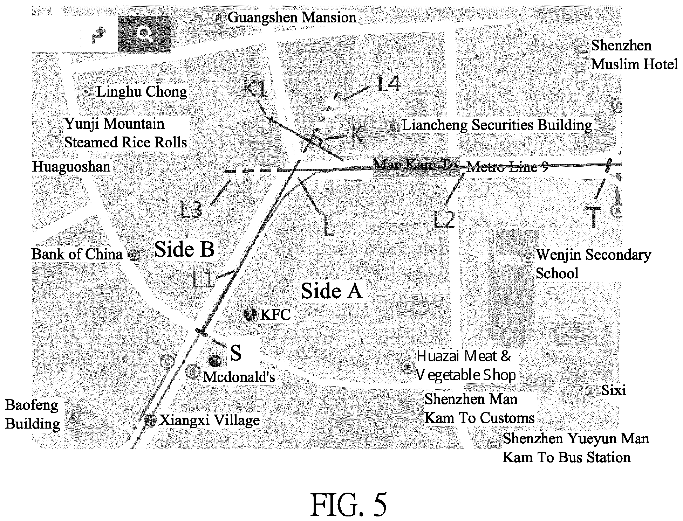

FIG. 5 shows an L-shaped winding road "Chunfeng Road", and it is assumed that a point S serves as a start point 0 and a point T serves as a terminal point of the road. A central line of the actual road has a curved turn, above which a point L is used as a control point of central lines of virtual roads. As shown in FIG. 5, central lines L1 and L2 of virtual roads intersect at the point L. L4, L3 are respectively extension lines of L1, L2. A line vertical to L4 is drawn through a point K1, and intersects L4 at a point K. It is assumed that the distance from L to S along the central line of the actual road is 1324 meters, the distance from K to L is 10 meters, and the distance from K1 to K is 20 meters; therefore, the location of K1 is described as "Chunfeng Road B1324-10P20", where the distance from any point on an extension line of the road to the turning point of the road is described as a negative value, and "-" is added in the front.

### Embodiment 5

According to the above method for marking locations, locations can be briefly and explicitly described in words. Therefore, when a navigation destination is to be set, there is no need to perform fuzzy search to find similar destinations and manually select a desired one by users; instead, an accurate navigation destination is directly entered. With the help of speech recognition technologies, navigation destinations can be entered completely through voice, and thus can be changed freely to implement rerouting while the vehicle is moving.

### Embodiment 6

According to the above method for marking locations, location information can be precisely and briefly described in words. Therefore, positioning and navigation functions can be conveniently applied in small-screen devices such as smart watches and small vehicle navigation devices. On the small-screen devices, the current location can be displayed in mere words; in this case, an image of a map does not need to be displayed, and the difficulty in finding navigation destinations and the difficulty in describing the current location will not occur.

The above embodiments are merely used to illustrate the specific implementations of the present invention. It should be noted that persons of ordinary skill in the art can make several modifications and changes.

## Claims

1. A method for marking locations along roads in a map, wherein
the method is executed by a system, and the system comprises a location marking module, a location obtaining module, a location data conversion module, and a location information displaying module, wherein the location marking module is configured to mark locations along roads in a map based on location information obtained from a satellite positioning system, the location obtaining module is configured to obtain location information of a target point through the satellite positioning system, the location data conversion module is configured to convert longitude and latitude data obtained from the satellite positioning system into data of the locations marked along the roads, and the location information displaying module is configured to display the converted data of the locations marked along the roads; and
the method comprises the following step:
S1: taking one end of a main road bearing the same name as a start point 0, and marking locations using distances from each location to the start point 0 along a central line of the main road, the distances being obtained in meters;
**characterized in that** the method further comprises the following steps:
S2: if setting off from the start point 0, regarding the right side of the advancing direction as Side A and the left side of the advancing direction as Side B; and if setting off from the terminal point to the start point of the road, regarding the right side of the advancing direction as Side C, Side B and Side C being of the same side but in opposite advancing directions;
S3: taking the central line of the main road as a datum line, and marking locations of longitudinal sites along the road by using lines vertical to the central line of the main road; if the sites are inside the road containing branches, side roads and overpasses, marking the sites with V followed by digits which indicate vertical distances from the locations on the road to the central line of the road, the distances being obtained in meters; while if the sites are outside the road, marking the sites with P followed by digits which indicate vertical distances from the locations to the central line of the road, the distances being obtained in meters; and for a bent road, marking locations using a central line of a virtual road, wherein the start point 0, the terminal point, and several points there-between are selected as control points on the central line of the main road, and the control points are sequentially connected by a straight line to form a central line of a virtual road; a line vertical to the central line of the virtual road is drawn through a location K and intersects the central line of the actual road at a point Q; the distance measured from the point Q to the start point 0 along the central line of the actual road is the distance from the point K to the start point 0; and the linear distance from the point K to the point Q determines the longitudinal location of the point K; and
S4: drawing lines that respectively pass through sites on side roads, branches, and overpasses and are vertical to the central line of the main road, using distances from intersections between the vertical lines and the central line of the road to the start point 0 to determine distances from the sites on the side roads, the branches, and the overpasses to the start point 0, and adding descriptive words "side road", "branch", and "overpass" respectively.

2. The method for marking locations along roads in a map according to claim 1, further comprising: if the central line of the virtual road is a fold line, a vertical line drawn from a point between two segments of the fold line only intersects an extension line of the fold line; the location of a point on the extension line is indicated by using the distance from the point to the intersection between the fold line segments, and is marked with a minus sign "-" for distinction.

## Patentansprüche

1. Verfahren zum Markieren von Orten entlang von Straßen in einer Karte, wobei
das Verfahren von einem System ausgeführt wird und das System ein Standortmarkierungsmodul, ein Standortgewinnungsmodul, ein Standortdatenumwandlungsmodul und ein Standortinformationsanzeigemodul umfasst, wobei das Standortmarkierungsmodul so konfiguriert ist, dass es Standorte entlang von Straßen in einer Karte auf der Grundlage von Standortinformationen markiert, die von einem Satellitenpositionierungssystem erhalten werden, das Standortgewinnungsmodul so konfiguriert ist, dass es Standortinformationen eines Zielpunkts über das Satellitenpositionierungssystem erhält, das Standortdatenumwandlungsmodul so konfiguriert ist, dass es Längen- und Breitengraddaten, die von dem Satellitenpositionierungssystem erhalten wurden, in Daten der entlang der Straßen markierten Standorte umwandelt, und das Standortinformationsanzeigemodul so konfiguriert ist, dass es die umgewandelten Daten der entlang der Straßen markierten Standorte anzeigt; und
das Verfahren die folgenden Schritte umfasst:
SI: Nehmen eines Endes einer Hauptstraße, die den gleichen Namen wie ein Startpunkt 0 trägt, und Markieren von Orten unter Verwendung von Entfernungen von jedem Ort zu dem Startpunkt 0 entlang einer Mittellinie der Hauptstraße, wobei die Entfernungen in Meter erhalten werden, **dadurch gekennzeichnet, dass** das Verfahren ferner die folgenden Schritte umfasst:
S2: wenn man vom Startpunkt 0 losfährt, betrachtet man die rechte Seite der Vorwärtsrichtung als Seite A und die linke Seite der Vorwärtsrichtung als Seite B; und wenn man vom Endpunkt zum Startpunkt der Straße losfährt, betrachtet man die rechte Seite der Vorwärtsrichtung als Seite C, wobei Seite B und Seite C von derselben Seite sind, aber in entgegengesetzten Vorwärtsrichtungen;
S3: Verwendung der Mittellinie der Hauptstraße als Bezugslinie und Markierung der Standorte von Längsstandorten entlang der Straße unter Verwendung von Linien, die senkrecht zur Mittellinie der Hauptstraße verlaufen; wenn sich die Standorte innerhalb der Straße befinden, die Abzweigungen, Seitenstraßen und Überführungen enthält, Markierung der Standorte mit V, gefolgt von Ziffern, die vertikale Entfernungen von den Standorten auf der Straße zur Mittellinie der Straße angeben, wobei die Entfernungen in Metern angegeben werden; wenn sich die Standorte außerhalb der Straße befinden, Markierung der Standorte mit P, gefolgt von Ziffern, die vertikale Entfernungen von den Standorten zur Mittellinie der Straße angeben, wobei die Entfernungen in Metern angegeben werden; und für eine gebogene Straße, Markieren von Orten unter Verwendung einer Mittellinie einer virtuellen Straße, wobei der Startpunkt 0, der Endpunkt und mehrere Punkte dazwischen als Kontrollpunkte auf der Mittellinie der Hauptstraße ausgewählt werden und die Kontrollpunkte aufeinanderfolgend durch eine gerade Linie verbunden werden, um eine Mittellinie einer virtuellen Straße zu bilden; eine Linie senkrecht zu der Mittellinie der virtuellen Straße durch einen Ort K gezogen wird und die Mittellinie der tatsächlichen Straße in einem Punkt Q schneidet; die von dem Punkt Q zu dem Startpunkt 0 entlang der Mittellinie der tatsächlichen Straße gemessene Entfernung die Entfernung von dem Punkt K zu dem Startpunkt 0 ist; und die lineare Entfernung von dem Punkt K zu dem Punkt Q die Längslage des Punktes K bestimmt; und
S4: Zeichnen von Linien, die jeweils durch Standorte auf Nebenstraßen, Abzweigungen und Überführungen führen und senkrecht zur Mittellinie der Hauptstraße sind, Verwenden von Entfernungen von Schnittpunkten zwischen den senkrechten Linien und der Mittellinie der Straße zum Startpunkt 0, um Entfernungen von den Standorten auf den Nebenstraßen, den Abzweigungen und den Überführungen zum Startpunkt 0 zu bestimmen, und Hinzufügen von beschreibenden Wörter "Nebenstraße", "Abzweigung" und "Überführung".

2. Verfahren zum Markieren von Orten entlang von Straßen in einer Karte nach Anspruch 1, das ferner umfasst: wenn die Mittellinie der virtuellen Straße eine Faltlinie ist, schneidet eine vertikale Linie, die von einem Punkt zwischen zwei Segmenten der Faltlinie gezogen wird, nur eine Verlängerungslinie der Faltlinie; der Ort eines Punktes auf der Verlängerungslinie wird unter Verwendung der Entfernung von dem Punkt zu dem Schnittpunkt zwischen den Faltliniensegmenten angegeben und zur Unterscheidung mit einem Minuszeichen markiert.

## Revendications

1. Procédé de marquage d'emplacements le long de routes sur une carte, dans lequel
le procédé est exécuté par un système, et le système comprend un module de marquage d'emplacement, un module d'obtention d'emplacement, un module de conversion de données d'emplacement, et un module d'affichage d'informations d'emplacement, dans lequel le module de marquage d'emplacement est configuré pour marquer des emplacements le long de routes sur une carte d'après des informations d'emplacement obtenues à partir d'un système de positionnement par satellite, le module d'obtention d'emplacement est configuré pour obtenir des informations d'emplacement d'un point cible par le biais du système de positionnement par satellite, le module de conversion de données d'emplacement est configuré pour convertir des données de longitude et de latitude obtenues à partir du système de positionnement par satellite en données des emplacements marqués le long des routes, et le module d'affichage d'informations d'emplacement est configuré pour afficher les données converties des emplacements marqués le long des routes ; et
le procédé comprend l'étape suivante :
S1 : la prise d'une extrémité d'une route principale portant le même nom comme point de départ 0, et le marquage d'emplacements à l'aide de distances depuis chaque emplacement jusqu'au point de départ 0 le long d'une ligne centrale de la route principale, les distances étant obtenues en mètres ; **caractérisé en ce que** le procédé comprend en outre les étapes suivantes :
S2 : si l'on part du point de départ 0, la considération du côté droit de la direction de déplacement comme le côté A et du côté gauche de la direction de déplacement comme le côté B ; et si l'on part du point final jusqu'au point de départ de la route, la considération du côté droit de la direction de déplacement comme le côté C, le côté B et le côté C étant du même côté, mais dans des directions de déplacement différentes ;
S3 : la prise de la ligne centrale de la route principale comme ligne de référence, et le marquage d'emplacements de sites longitudinaux le long de la route à l'aide de lignes verticales par rapport à la ligne centrale de la route principale ; si les sites se trouvent à l'intérieur de la route contenant des bifurcations, des routes secondaires et des viaducs, le marquage des sites d'un V suivi de chiffres qui indiquent des distances verticales depuis les emplacements sur la route jusqu'à la ligne centrale de la route, les distances étant obtenues en mètres ; tandis que si les sites se trouvent à l'extérieur de la route, le marquage des sites d'un P suivi de chiffres qui indiquent des distances verticales depuis les emplacements jusqu'à la ligne centrale de la route, les distances étant obtenues en mètres ; et pour une route en courbe, le marquage d'emplacements à l'aide d'une ligne centrale d'une route virtuelle, dans lequel le point de départ 0, le point terminal, et plusieurs points entre eux sont sélectionnés en tant que points de contrôle sur la ligne centrale de la route principale, et les points de contrôle sont reliés successivement par une ligne droite pour former une ligne centrale d'une route virtuelle ; une ligne verticale par rapport à la ligne centrale de la route virtuelle est tracée en passant par un emplacement K et coupe la ligne centrale de la route réelle en un point Q ; la distance mesurée depuis le point Q jusqu'au point de départ 0 le long de la ligne centrale de la route réelle est la distance depuis le point K jusqu'au point de départ 0 ; et la distance linéaire depuis le point K jusqu'au point Q détermine l'emplacement longitudinal du point K ; et
S4 : le traçage de lignes qui passent respectivement par des sites sur des routes secondaires, des bifurcations, et des viaducs et sont verticales par rapport à la ligne centrale de la route principale, à l'aide de distances depuis des intersections entre des lignes verticales et la ligne centrale de la route jusqu'au point de départ 0 pour déterminer des distances depuis les sites sur les routes secondaires, les bifurcations, et les viaducs jusqu'au point de départ 0, et l'ajout de mots descriptifs « route secondaire », « bifurcation » et « viaduc » respectivement.

2. Procédé de marquage d'emplacements le long de routes sur une carte selon la revendication 1, comprenant en outre : si la ligne centrale de la route virtuelle est une ligne de pliage, une ligne verticale tracée à partir d'un point entre deux segments de la ligne de pliage ne coupe qu'une ligne d'extension de la ligne de pliage ; l'emplacement d'un point sur la ligne d'extension est indiqué par l'utilisation de la distance depuis le point jusqu'à l'intersection entre les segments de ligne de pliage, et est marqué d'un signe négatif « - » à des fins de distinction.
